# EUROPEAN PATENT APPLICATION

(11) **EP 2 043 336 A2**
(43) Date of publication of application: **01.04.2009**
(21) Application number: 08165085.5
(22) Date of filing: 25.09.2008
(51) Int. Cl.: H04M 1/253, H04M 1/725

(54) **Apparatus having mobile terminal as input/output device of computer and related system and method**

(30) Priority: 29.09.2007 CN 200710175435
(71) Applicant: Lenovo (Beijing) Limited, Haidian District, Beijing 100085 (CN)
(72) Inventor: Xu, Chao 6 Chuangye Road, Haidian District, Beijing / Beijing 100085 (CN); Xu, Lian 6 Chuangye Road, Haidian District, Beijing / Beijing 100085 (CN); Wu, Yaqiang 6 Chuangye Road, Haidian District, Beijing / Beijing 100085 (CN); Chen, Shaowei 6 Chuangye Road, Haidian District, Beijing / Beijing 100085 (CN); Zhang, Xiaoping 6 Chuangye Road, Haidian District, Beijing / Beijing 100085 (CN)
(74) Representative: Barth, Stephan Manuel

(57) **Abstract**

The present invention discloses a system having a mobile terminal used as an input/output device of a computer, comprising a mobile terminal side audio input/output unit, a mobile terminal side sending/receiving unit, a computer side sending/receiving unit and a computer side virtual audio driving unit, wherein, the mobile terminal side audio input unit is adapted to collect audio data; the mobile terminal side audio output unit is adapted to play the audio data; the computer side virtual audio driving unit is adapted to have the mobile terminal used as the input/output device of the computer. The present invention further discloses a mobile terminal, a computer, and a method for the system. It is possible to, with an existing mobile terminal, directly have the mobile terminal virtualized as the input/output device of the computer by using the system of the present invention and the mobile terminal, the computer and the method thereof, so that users may use the mobile terminal to initiate and receive VolP calls.

## Description

### BACKGROUND OF THE INVENTION

### FIELD OF INVENTION

The present invention relates to the virtual driving technique, more specifically, to a mobile terminal serving as an input/output device of a computer, a computer having a mobile terminal as an input/output device thereof, and a system and method thereof.

### DESCRIPTION OF PRIOR ART

Generally, a mobile terminal serves as a communication terminal, and has advantages of portability and mobility, enabling a user to communicate with any others at any time and in any place, Currently, with the development of instant communication applications and network telephony (VoIP) communication applications, there are plentiful applications with voice communication function occurring in a computer, such as Skype, MSN, QQ or Google Talk, to achieve a VoIP voice communication. Moreover, implementing the voice communication in the computer in such manner provides the advantage that the communication fashions among users, on one hand, are enriched and the communication expenses, on the other hand, are made cheaper than those of employing the traditional mobile terminals; while provides the disadvantage that users are bound to the computer to use the above applications. Therefore, currently it is desired to combine both the above communication means together so as to implement the voice communication while taking into account the advantages of the both. That is to say, it is desired that a user can communicate with others using a mobile terminal by means of applications with the voice communication function in a computer, so that traditional calling experiences are achieved by utilizing the portability and mobility of the mobile terminal.

An existing solution is to implement a Bluetooth headset protocol in a mobile terminal, and thus make the mobile terminal virtualized as a Bluetooth headset by using the protocol, which is connected to a computer, so as to initiate and receive VoIP calls.

Shortcomings of the existing technique are as follows:
1. Analog voice signals are transmitted by adopting the Bluetooth headset protocol as a voice channel, thereby resulting in a poor extensibility For example, it is impossible to perform further extended processes, such as compression, on audio data.
2. Since the Bluetooth headset protocol is not a general communication protocol, users can use the mobile terminals to initiate and receive the VoIP calls only when mobile terminal manufacturers have customized and modified Bluetooth protocol stacks on the existing mobile terminals. That is to say, it is impossible to directly use the existing mobile terminals to achieve this solution.

### SUMMARY OF THE INVENTION

In view of the above, a main purpose of the present invention is to provide a mobile terminal serving as an input/output device of a computer, and a computer having a mobile terminal as an input/output device thereof. Thus, with an existing mobile terminal, it is possible to directly have the mobile terminal virtualized as the input/output device of the computer, so that users may use the mobile terminal to initiate and receive VoIP calls.

Another purpose of the present invention is to provide a system having a mobile terminal used as an input/output device of a computer. Thus, with an existing mobile terminal, it is possible to directly have the mobile terminal virtualized as the input/output device of the computer, so that users may use the mobile terminal to initiate and receive the VoIP calls.

Yet another purpose of the present invention is to provide a method for having a mobile terminal used as an input/output device of a computer. Thus, with an existing mobile terminal, it is possible to directly have the mobile terminal virtualized as the input/output device of the computer, so that users may use the mobile terminal to initiate and receive the VoIP calls.

To achieve the above purposes, the technical solutions of the present invention are provided as follows.

According to an aspect of the invention, there is provided a mobile terminal serving as an input device of a computer, comprising a mobile terminal side audio input unit and a mobile terminal side sending unit, wherein, the mobile terminal side audio input unit is connected to a computer side virtual audio driving unit via the mobile terminal side sending unit and a computer side receiving unit, and is adapted to collect audio data; and the mobile terminal side sending unit is adapted to obtain the audio data from the mobile terminal side audio input unit, and send it to the computer side receiving unit.

Preferably, the mobile terminal side sending unit adopts a short-distance wireless transfer manner to send the audio data.

Preferably, the mobile terminal side sending unit further adopts a Bluetooth serial port protocol to send the audio data.

Preferably, the mobile terminal further comprises a mobile terminal side audio processing unit, which is adapted to perform compression, and/or voice modification, and/or tonal modification on the audio data.

Preferably, the mobile terminal further comprises a mobile terminal side audio output unit and a mobile terminal side receiving unit, wherein, the mobile terminal side audio output unit is connected to a computer side virtual audio driving unit via the mobile terminal side receiving unit and a computer side sending unit, and is adapted to play audio data; and the mobile terminal side receiving unit is adapted to receive the audio data from the computer side sending unit, and send it to the mobile terminal side audio output unit.

Preferably, the mobile terminal side receiving unit adopts a short-distance wireless transfer manner to receive the audio data.

Preferably, the mobile terminal side receiving unit further adopts a Bluetooth serial port protocol to receive the audio data.

Preferably, the mobile terminal further comprises a mobile terminal side audio processing unit, which is adapted to perform decompression, and/or voice modification, and/or tonal modification on the audio data.

According to another aspect of the invention, there is provided a computer having a mobile terminal as an input/output device thereof, comprising a computer side sending unit, a computer side receiving unit and a computer side virtual audio driving unit, wherein, the computer side sending unit is adapted to send audio data received from the computer side virtual audio driving unit to a mobile terminal side receiving unit; the computer side receiving unit is adapted to send audio data received from a mobile terminal side sending unit to the computer side virtual audio driving unit; and the computer side virtual audio driving unit is adapted to have the mobile terminal used as the input/output of the computer.

Preferably, the computer side sending unit further adopts a Bluetooth serial port protocol to send the audio data; and the computer side receiving unit further adopts a Bluetooth serial port protocol to receive the audio data.

Preferably, the computer further comprises a computer side audio processing unit, which is adapted to perform decompression/compression, and/or voice modification, and/or tonal modification on the audio data.

Preferably, the computer side virtual audio driving unit adopts a virtual sound card driving manner to have the mobile terminal virtualized as the input/output device of the computer.

According to still another aspect of the invention, there is provided a system having a mobile terminal used as an input/output device of a computer, comprising a mobile terminal side audio input unit, a mobile terminal side audio output unit, a mobile terminal side sending unit, a mobile terminal side receiving unit, a computer side sending unit, a computer side receiving unit and a computer side virtual audio driving unit, wherein, the mobile terminal side audio input unit is connected to the computer side virtual audio driving unit via the mobile terminal side sending unit and the computer side receiving unit, and is adapted to collect audio data; the mobile terminal side audio output unit is connected to the computer side virtual audio driving unit via the mobile terminal side receiving unit and the computer side sending unit, and is adapted to play the audio data; the mobile terminal side sending unit is adapted to obtain the audio data from the mobile terminal side audio input unit, and send it to the computer side receiving unit; the computer side receiving unit is adapted to receive the audio data, and send it to the computer side virtual audio driving unit; the computer side sending unit is adapted to send the audio data received from the computer side virtual audio driving unit to the mobile terminal side receiving unit; the mobile terminal side receiving unit is adapted to receive the audio data, and send it to the mobile terminal side audio output unit; and the computer side virtual audio driving unit is adapted to have the mobile terminal used as the input/output device of the computer.

Preferably, a Bluetooth serial port protocol is adopted when transmitting data.

Preferably, the system further comprises a mobile terminal side audio processing unit and a computer side audio processing unit, wherein, the mobile terminal side audio processing unit is adapted to perform decompression/compression, and/or voice modification, and/or tonal modification on the audio data; and the computer side audio processing unit is adapted to perform decompression/compression, and/or voice modification, and/or tonal modification on the audio data.

Preferably, the computer side virtual audio driving unit adopts a virtual sound card driving manner to have the mobile terminal virtualized as the input/output device of the computer.

According to yet another aspect of the invention, there is provided a method for having a mobile terminal used as an input/output device of a computer, comprising steps of: adopting, by a mobile terminal side virtual audio driving unit, a virtual sound card driving manner to have the mobile terminal virtualized as the input/output device of the computer.

Preferably, before the step of having the mobile terminal virtualized as the input/output device of the computer, the method further comprising a step of: sending collected audio data to the computer side virtual audio driving unit via an audio device on the mobile terminal.

Preferably, after the step of having the mobile terminal virtualized as the input/output device of the computer, the method further comprising a step of: receiving audio data from the computer side virtual audio driving unit and then playing the audio data via an audio device on the mobile terminal.

Preferably, the audio data is transmitted in a short-distance wireless transfer manner between the mobile terminal and the computer.

Preferably, the short-distance wireless transfer manner comprises a Bluetooth serial port protocol.

Preferably, the audio data is compressed to be sent to the computer side virtual audio driving unit, wherein in the compression, different compression ratios are obtained by adopting respective compression algorithms for different types of the audio data.

The present invention provides the following advantages.
1. Since in the present invention the Bluetooth serial port protocol is adopted, which is a general protocol, it is possible to support most existing mobile terminals and thus to directly achieve the function of having the mobile terminals used as the input/output device of the computer, without performing system-level developments on the mobile terminals, such as modifying of bottom level protocols.
2. In the present invention digital signals are transmitted. The digital signals may be processed and compressed before being sent to the computer. Moreover, the used transmission bandwidth may be reduced through the compression of the digital signals, so that it is possible to simultaneously transmit video signals and voice signals with better effects. In contrast, with the existing techniques, the effect of simultaneously transmitting video signals and voice signals is very poor due to the limitation of the transmission bandwidth.
3. Taking into account the data transmission characteristics of the Bluetooth serial port protocol, and the factors that the computing capacities of the devices such as the mobile terminals are not very strong, and that the present invention is mainly applied to transmit voice data, in the present invention a pertinent compression algorithm is adopted. Particularly, it is possible to not only release the requirements for the device capacity in compression, but also obtain a desired compression ratio for the voice data.
4. In the present invention the advantage of portability and mobility of the mobile terminal, and the advantage of presence of the voice communication enabled applications in the computer are combined, so as to achieve direct dialing of IP calls by means of the mobile terminal and to save the expense of the mobile terminal.
5. Since in the present invention the computer side virtual audio driving unit is adopted to implement the hardware simulation on the bottom layer of the computer, there is no special requirement for the upper level VoIP applications, resulting in a good compatibility. Therefore, it is possible to support the popular instant communication applications, for example the instant communication applications with the voice communication function such as QQ, MSN, Skype or Google Talk.

### BRIEF DESCRIPTION OF THE DRAWINGS

Fig. 1 is a schematic diagram illustrating a composition structure of a mobile terminal serving as an input device of a computer according to an embodiment of the present invention;
Fig. 2 is a schematic diagram illustrating a composition structure of a mobile terminal serving as an output device of a computer according to an embodiment of the present invention;
Fig. 3 is a schematic diagram illustrating a composition structure of a computer according to an embodiment of the present invention;
Fig. 4 is a schematic diagram illustrating a composition structure of a system according to an embodiment of the present invention; and
Fig. 5 is a schematic diagram for illustrating a flow of a method according to an embodiment of the present invention.

### DETAILED DESCRIPTION OF PREFERRED EMBODIMENTS

According to the present invention, a short-distance wireless transfer manner is adopted to transmit digital signals, and this transfer manner is a general transfer protocol. The present invention directly implements a function for having a mobile terminal used as an input/output device of a computer. The short-distance wireless transfer manner comprises a manner in which a Bluetooth transfer protocol is used for transfer. Further, the Bluetooth transfer protocol comprises a Bluetooth serial port protocol.

Meanwhile, according to the present invention, a computer side virtual audio driving unit is adopted to implement the hardware simulation on the bottom layer of the computer. Moreover, due to the computer side virtual audio driving unit, it is possible to achieve bidirectional shielding and general identification between the mobile terminal and upper level VoIP applications, such as QQ, MSN, Skyper or Google Talk. Therefore, the present invention has very good compatibility in supporting popular instant communication applications with the voice communication function.

To make the purposes, technical solutions and advantages of the present invention much clearer, the present invention will be described in detail by way of embodiments with reference to the drawings.

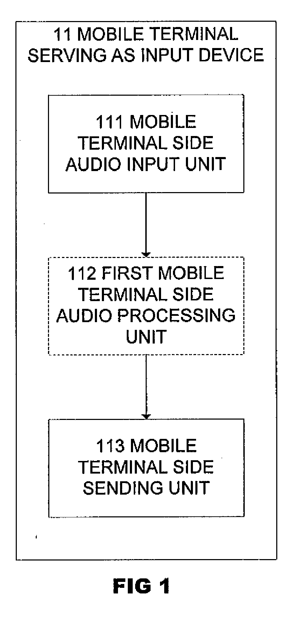

A mobile terminal 11 serving as an input device of a computer, which comprises a mobile terminal side audio input unit 111 and a mobile terminal side sending unit 113, is shown in Fig. 1.

The mobile terminal side audio input unit 111 is connected to a computer side virtual audio driving unit via the mobile terminal side sending unit 113 and a computer side receiving unit, and is adapted to collect audio data. The mobile terminal side sending unit 113 is adapted to obtain the collected audio data from the mobile terminal side audio input unit 111, and send it to the computer side receiving unit.

Here, the mobile terminal is considered to be an input device, such as a microphone. The mobile terminal side sending unit 113 adopts a short-distance wireless transfer manner to send the audio data. The short-distance wireless transfer manner comprises, but not limited to, a manner in which a Bluetooth transfer protocol is used for transfer. Further, the mobile terminal side sending unit 113 adopts a Bluetooth serial port protocol to send the audio data.

The mobile terminal 11 serving as the input device of the computer further comprises a mobile terminal side audio processing unit. The mobile terminal side audio processing unit discussed here is a first mobile terminal side audio processing unit 112, which is adapted to perform compression, and/or voice modification, and/or tonal modification on the audio data.

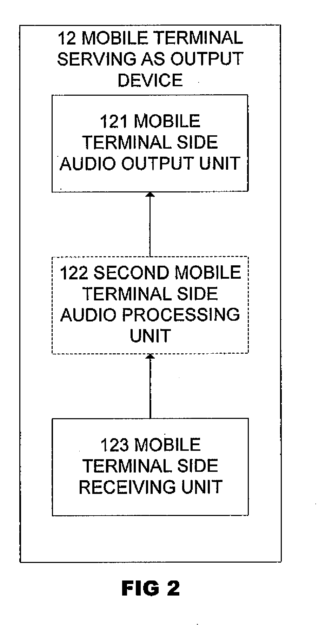

A mobile terminal 12 serving as an output device of a computer, which comprises a mobile terminal side audio output unit 121 and a mobile terminal side receiving unit 123, is shown in Fig. 2.

The mobile terminal side audio output unit 121 is connected to the computer side virtual audio driving unit via the mobile terminal side receiving unit 123 and a computer side sending unit, and is adapted to play audio data. The mobile terminal side receiving unit 123 is adapted to receive the audio data from the computer side sending unit, and send it to the mobile terminal side audio output unit 121.

Here, the mobile terminal is considered to be an output device, such as a headset. Said mobile terminal side receiving unit 123 adopts a short-distance wireless transfer manner to receive the audio data. The short-distance wireless transfer manner comprises, but not limited to, a manner in which a Bluetooth transfer protocol is used for transfer. Further, the mobile terminal side receiving unit 123 uses a Bluetooth serial port protocol to receive the audio data.

The mobile terminal 12 serving as the output device of the computer further comprises a mobile terminal side audio processing unit. The mobile terminal side audio processing unit discussed here is a second mobile terminal side audio processing unit 122, which is adapted to perform decompression, and/or voice modification, and/or tonal modification on the audio data.

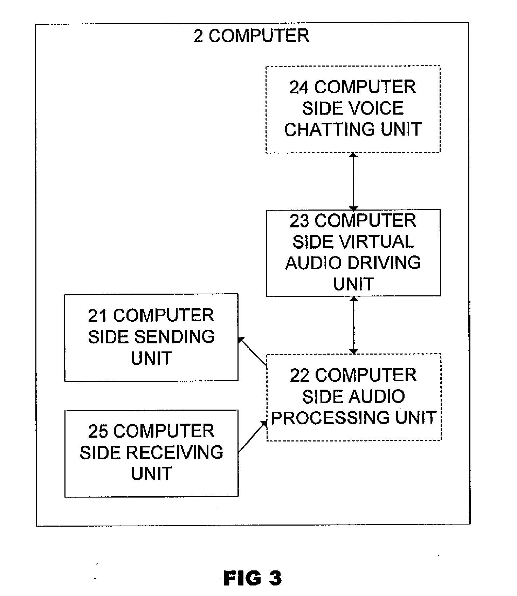

A computer 2 having a mobile terminal as an input/output device thereof, which comprises a computer side sending unit 21, a computer side receiving unit 25 and a computer side virtual audio driving unit 23, is shown in Fig. 3.

The computer side sending unit 21 is adapted to send audio data received from the computer side virtual audio driving unit 23 to the mobile terminal side receiving unit 123. The computer side receiving unit 25 is adapted to send the audio data received from the mobile terminal side sending unit 113 to the computer side virtual audio driving unit 23. The computer side virtual audio driving unit 23 is adapted to have the mobile terminal used as an input/output device of the computer.

Here, the computer side sending unit 21 adopts a short-distance wireless transfer manner to send the audio data, and the computer side receiving unit 25 adopts a short-distance wireless transfer manner to receive the audio data. The short-distance wireless transfer manner comprises, but not limited to, a manner in which a Bluetooth transfer protocol is used for transfer. Further, the computer side sending unit 21 uses a Bluetooth serial port protocol to send the audio data, and the computer side receiving unit 25 uses the Bluetooth serial port protocol to receive the audio data.

The computer side virtual audio driving unit 23 adopts a virtual sound card driving manner to have the mobile terminal virtualized as the input/output device of the computer.

The computer 2 having the mobile terminal as the input/output device thereof further comprises a computer side audio processing unit 22, which is adapted to perform decompression/compression, and/or voice modification, and/or tonal modification on the audio data. Here, for the audio data to be sent to the computer side sending unit 21 from the computer side virtual audio driving unit 23, it is necessary to be compressed before being sent; and for the audio data to be sent to the computer side virtual audio driving unit 23 from the computer side receiving unit 25, it is necessary to be decompressed before being sent.

The computer 2 having the mobile terminal as the input/output device thereof further comprises a computer side voice chatting unit 24, which is adapted to achieve voice chatting among users and dialing of VoIP calls.

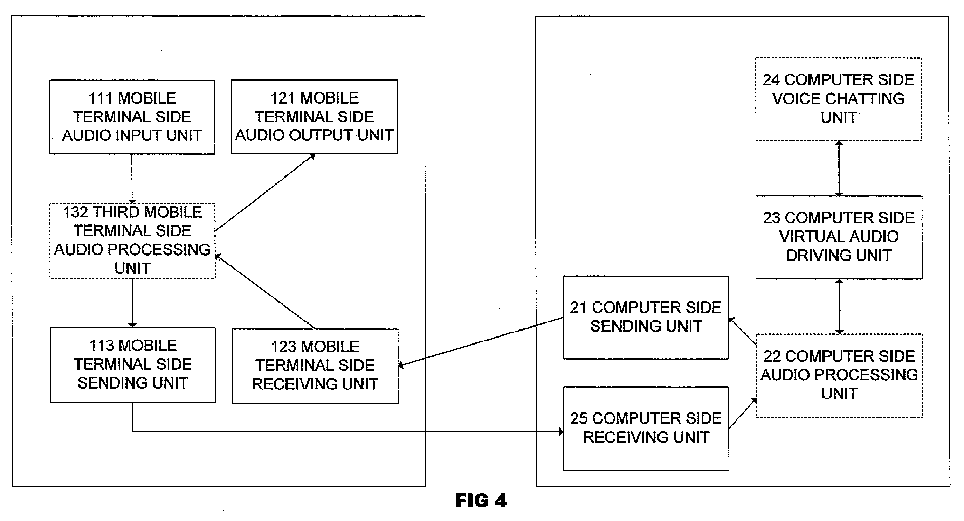

As shown in Fig. 4, a system having a mobile terminal used as an input/output device of a computer, comprises a mobile terminal side audio input unit 111, a mobile terminal side audio output unit 121, a mobile terminal side sending unit 113, a mobile terminal side receiving unit 123, a computer side sending unit 21, a computer side receiving unit 25 and a computer side virtual audio driving unit 23.

The mobile terminal side audio input unit 111 is connected to the computer side virtual audio driving unit 23 via the mobile terminal side sending unit 113 and the computer side receiving unit 25, and is adapted to collect audio data. The mobile terminal side audio output unit 121 is connected to the computer side virtual audio driving unit 23 via the mobile terminal side receiving unit 123 and the computer side sending unit 21, and is adapted to play audio data. The mobile terminal side sending unit 113 is adapted to obtain the audio data from the mobile terminal side audio input unit 111, and send it to the computer side receiving unit 25. The computer side receiving unit 25 is adapted to receive the audio data, and send it to the computer side virtual audio driving unit 23. The computer side sending unit 21 is adapted to send the audio data received from the computer side virtual audio driving unit 23 to the mobile terminal side receiving unit 123. The mobile terminal side receiving unit 123 is adapted to receive the audio data, and send it to the mobile terminal side audio output unit 121. The computer side virtual audio driving unit 23 is adapted to have the mobile terminal used as the input/output device of the computer.

Here, the audio data collected and then sent by the mobile terminal side audio input unit 111 is a digital signal, which may be subjected to a series of extended processes, such as compression.

Here, a short-distance wireless transfer manner is adopted to transmit the audio data between the mobile terminal side sending unit 113 and the computer side receiving unit 25, or between the computer side sending unit 21 and the mobile terminal side receiving unit 123. The short-distance wireless transfer manner comprises, but not limited to, a manner in which a Bluetooth transfer protocol is used for transfer. The Bluetooth transfer protocol comprises a Bluetooth serial port protocol. Then, the Bluetooth serial port protocol may be used as a transmission channel for transmitting the audio data. Additionally, the Bluetooth transfer protocol further comprises a Bluetooth headset protocol.

It should be noted that, the Bluetooth serial port protocol used for transmitting data may comprise existing serial port protocols of the devices, or newly created Bluetooth serial port protocols. The detailed implementations comprise that: the mobile terminal side connects to an existing serial port protocol at the computer side; or a new serial port protocol is created at the computer side, and the mobile terminal side connects to the serial port protocol at the computer side; or the computer side connects to an existing serial port protocol at the mobile terminal side; or a new serial port protocol is created at the mobile terminal side, and the computer side connects to the serial port protocol at the mobile terminal side.

Here, the computer side virtual audio driving unit 23 adopts a virtual sound card driving manner to have the mobile terminal virtualized as the input/output device of the computer, such as an audio device, so that the upper level applications with the voice communication function, such as QQ, MSN, Skype or Google Talk, can correctly identify and use the mobile terminal.

For the computer side virtual audio driving unit 23, it is a unit for running a virtual sound card driver. The upper level applications with the voice communication function may be VoIP applications.

Since the virtual sound card driver has performed the hardware simulation on the bottom layer at the computer side, there are no special requirements for the upper level VoIP applications, resulting in a good compatibility. As a result, the VoIP applications may correctly identify the mobile terminal as an input/output device of the computer, and achieves the function of having the mobile terminal virtualized as the input/output device of the computer.

That is to say, the virtual sound card driving manner adopted by the computer side virtual audio driving unit 23 achieves generality and bidirectional shielding, such that it is possible to directly have the mobile terminal used as an audio input/output device for the different upper level VoIP applications, such as QQ, MSN, Skype or Google Talk, without extra developments. Since these applications may directly identify the computer side virtual audio driving unit 23, and the data exchanging between the mobile terminal and the computer is also achieved by the computer side virtual audio driving unit 23, the mobile terminal may be associated with the applications via the virtual driving unit 23, so as to achieve the function of having the mobile terminal virtualized as the input/output device of the computer.

To be specific, the adopted virtual sound card driving manner is based on Microsoft standardization, and thus is for general use, and may be directly used and identified by the upper level VoIP applications.

Additionally, the differences between the sound card driving manner and the virtual sound card driving manner lie in that: when adopting the sound card driving manner, there is a real sound card in the computer, with which the computer collects the real data in the computer, and passes it to the upper level VoIP applications via a sound card driver; while when adopting the virtual sound card driving manner, the virtual data collected from other devices than the computer, which data does not pertain to the hardware of the computer, is passed to the upper level VoIP applications via a virtual sound card driver.

In a word, from two different perspectives, one using the upper level VoIP applications as a reference, and one using the mobile terminal as a reference, the following conclusions may be derived. On one hand, it is possible to collect the non-hardware data and pass it to the upper level VoIP applications by use of the virtual audio driving manner. The upper level VoIP applications may consider the data is sent from the computer and correctly identify it, no matter where the data comes from. On the other hand, the upper level VoIP applications adopts the virtual audio driving manner to return the data to the mobile terminal or the other devices, and considers the data is returned to the computer, no manner where the data should be returned to. That is to say, the adopted virtual sound card driving manner achieves generality and bidirectional shielding.

The system having the mobile terminal used as the input/output device of the computer further comprises a mobile terminal side audio processing unit and a computer side audio processing unit 22.

The mobile terminal side audio processing unit here is a third mobile terminal side audio processing unit 132, and the mobile terminal side audio input unit 111 is connected to the mobile terminal side sending unit 113 via the third mobile terminal side audio processing unit 132. The mobile terminal side audio output unit 121 is connected to the mobile terminal side receiving unit 123 via the third mobile terminal side audio processing unit 132.

The third mobile terminal side audio processing unit 132 is adapted to perform decompression/compression, and/or voice modification, and/or tonal modification on the audio data. Here, for the audio data to be sent to the mobile terminal side sending unit 113 via the mobile terminal side audio input unit 111, it is necessary to be compressed before being sent; for the audio data to be sent to mobile terminal side audio output unit 121 via the mobile terminal side receiving unit 123, it is necessary to be decompressed before being sent.

The computer side audio processing unit 22 is adapted to perform decompression/compression, and/or voice modification, and/or tonal modification on the audio data.

The system having the mobile terminal used as the input/output device of the computer further comprises a computer side voice chatting unit 24, i.e. a unit located at the upper level of the system and adapted to run the VoIP applications, which is adapted to achieve voice chatting among users and dialing of the VoIP calls. Here, the VoIP applications are the upper level applications with the voice communication function, such as QQ, MSN, Skype, Google Talk, and the like.

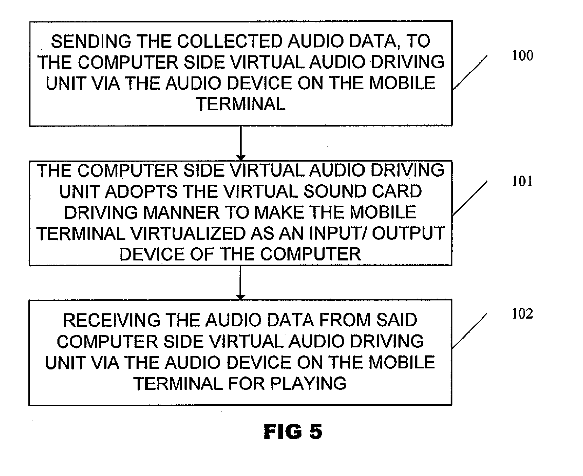

As shown in Fig. 5, a method for having a mobile terminal used as an input/output device of a computer comprises the following steps.

In step 101, a computer side virtual audio driving unit adopts a virtual sound card driving manner, i.e. a virtual audio driver makes the mobile terminal virtualized as the input/output device of the computer, such as an audio device. Moreover, the mobile terminal may serve as an input device, such as a microphone, and may also serve as an output device, such as a headset.

Here, the audio device is actually embodied as a headset or microphone of the mobile terminal, which headset or microphone achieves, between the user and the computer, sending of the audio data collected from the user or receiving and then playing of the audio data from the computer, by means of the mobile terminal.

Before step 101, there is a further step 100, in which the collected audio data, i.e. the audio signal, is sent to the computer side virtual audio driving unit via the audio device on the mobile terminal.

Here, the audio data is subject to compression, and/or voice modification, and/or tonal modification, before being sent to the computer side virtual audio driving unit.

In the compression process, the present invention adopts respective compression algorithms to obtain different compression ratios for different types of the transmitted audio data. If voice data is transmitted, it is possible to obtain a higher compression ratio by using a corresponding compression algorithm, because the frequency, intensity and the other characteristics of the voice data have relatively small changes. Since the compression algorithm has low complication, it is suitable for the devices whose computing capacity is not very strong, such as the mobile terminal. If music data is transmitted, only a lower compression ratio can be obtained by using a corresponding compression algorithm, because the frequency, intensity and the other characteristics of the music data have relatively large changes.

After step 101, there is further a step 102, in which the audio data is received from the computer side virtual audio driving unit and then is played via the audio device on the mobile terminal.

Here, the audio data is received from the computer side virtual audio driving unit, and then is subject to decompression, and/or voice modification, and/or tonal modification before being played.

Here, the audio data is transmitted in a short-distance wireless transfer manner between the mobile terminal and the computer. The short-distance wireless transfer manner comprises a manner in which a Bluetooth transfer protocol is used for transfer. Furthermore, the Bluetooth transfer protocol comprises a Bluetooth serial port protocol.

The above are only preferred embodiments of the present invention and are not intended to limit the present invention.

## Claims

1. A mobile terminal serving as an input device of a computer, comprising a mobile terminal side audio input unit and a mobile terminal side sending unit, wherein,
the mobile terminal side audio input unit is connected to a computer side virtual audio driving unit via said mobile terminal side sending unit and a computer side receiving unit, and is adapted to collect audio data; and
the mobile terminal side sending unit is adapted to obtain said audio data from said mobile terminal side audio input unit, and send it to said computer side receiving unit.

2. The mobile terminal according to claim 1, wherein, said mobile terminal side sending unit adopts a short-distance wireless transfer manner to send said audio data.

3. The mobile terminal according to claim 2, wherein, said mobile terminal side sending unit further adopts a Bluetooth serial port protocol to send said audio data.

4. The mobile terminal according to claim 1, wherein, said mobile terminal further comprises a mobile terminal side audio processing unit, which is adapted to perform compression, and/or voice modification, and/or tonal modification on said audio data.

5. A mobile terminal serving as an output device of a computer, comprising a mobile terminal side audio output unit and a mobile terminal side receiving unit, wherein,
the mobile terminal side audio output unit is connected to a computer side virtual audio driving unit via said mobile terminal side receiving unit and a computer side sending unit, and is adapted to play audio data; and
the mobile terminal side receiving unit is adapted to receive said audio data from said computer side sending unit, and send it to said mobile terminal side audio output unit.

6. The mobile terminal according to claim 5, wherein, said mobile terminal side receiving unit adopts a short-distance wireless transfer manner to receive said audio data.

7. The mobile terminal according to claim 6, wherein, said mobile terminal side receiving unit further adopts a Bluetooth serial port protocol to receive said audio data.

8. The mobile terminal according to claim 5, wherein, the mobile terminal further comprises a mobile terminal side audio processing unit, which is adapted to perform decompression, and/or voice modification, and/or tonal modification on said audio data.

9. A computer having a mobile terminal as an input/output device thereof, comprising a computer side sending unit, a computer side receiving unit and a computer side virtual audio driving unit, wherein,
the computer side sending unit is adapted to send audio data received from said computer side virtual audio driving unit to a mobile terminal side receiving unit;
the computer side receiving unit is adapted to send audio data received from a mobile terminal side sending unit to said computer side virtual audio driving unit; and
the computer side virtual audio driving unit is adapted to have the mobile terminal used as the input/output of the computer.

10. The computer according to claim 9, wherein, said computer side sending unit further adopts a Bluetooth serial port protocol to send said audio data; and said computer side receiving unit further adopts a Bluetooth serial port protocol to receive said audio data.

11. The computer according to claim 9, wherein, said computer further comprises a computer side audio processing unit, which is adapted to perform decompression/compression, and/or voice modification, and/or tonal modification on said audio data.

12. The computer according to claim 9, wherein, the computer side virtual audio driving unit adopts a virtual sound card driving manner to have the mobile terminal virtualized as the input/output device of the computer.

13. A system having a mobile terminal used as an input/output device of a computer, comprising a mobile terminal side audio input unit, a mobile terminal side audio output unit, a mobile terminal side sending unit, a mobile terminal side receiving unit, a computer side sending unit, a computer side receiving unit and a computer side virtual audio driving unit, wherein,
the mobile terminal side audio input unit is connected to said computer side virtual audio driving unit via said mobile terminal side sending unit and said computer side receiving unit, and is adapted to collect audio data;
the mobile terminal side audio output unit is connected to said computer side virtual audio driving unit via said mobile terminal side receiving unit and said computer side sending unit, and is adapted to play the audio data;
the mobile terminal side sending unit is adapted to obtain said audio data from said mobile terminal side audio input unit, and send it to said computer side receiving unit;
the computer side receiving unit is adapted to receive said audio data, and send it to said computer side virtual audio driving unit;
the computer side sending unit is adapted to send said audio data received from said computer side virtual audio driving unit to said mobile terminal side receiving unit;
the mobile terminal side receiving unit is adapted to receive said audio data, and send it to said mobile terminal side audio output unit; and
the computer side virtual audio driving unit is adapted to have the mobile terminal used as the input/output device of the computer.

14. The system according to claim 13, wherein, a Bluetooth serial port protocol is adopted when transmitting data.

15. The system according to claim 13, wherein, the system further comprises a mobile terminal side audio processing unit and a computer side audio processing unit, wherein
the mobile terminal side audio processing unit is adapted to perform decompression/compression, and/or voice modification, and/or tonal modification on said audio data; and
the computer side audio processing unit is adapted to perform decompression/compression, and/or voice modification, and/or tonal modification on said audio data.

16. The system according to of claim 13, wherein, the computer side virtual audio driving unit adopts a virtual sound card driving manner to have the mobile terminal virtualized as the input/output device of the computer.

17. A method for having a mobile terminal used as an input/output device of a computer, comprising steps of:
adopting, by a mobile terminal side virtual audio driving unit, a virtual sound card driving manner to have the mobile terminal virtualized as the input/output device of the computer.

18. The method according to claim 17, wherein, before the step of having said mobile terminal virtualized as the input/output device of the computer, the method further comprising a step of:
sending collected audio data to said computer side virtual audio driving unit via an audio device on said mobile terminal.

19. The method according to claim 17, wherein, after the step of having said mobile terminal virtualized as the input/output device of the computer, the method further comprising a step of:
receiving audio data from said computer side virtual audio driving unit and then playing the audio data via an audio device on said mobile terminal.

20. The method according to claim 18, wherein, said audio data is transmitted in a short-distance wireless transfer manner between said mobile terminal and said computer.

21. The method according to claim 20, wherein, said short-distance wireless transfer manner comprises a Bluetooth serial port protocol.

22. The method according to claim 18, wherein, the audio data is compressed to be sent to the computer side virtual audio driving unit, wherein in said compression, different compression ratios are obtained by adopting respective compression algorithms for different types of said audio data.
